# EUROPÄISCHE PATENTSCHRIFT

(11) **EP 2 724 812 B1**
(45) Veröffentlichungstag und Bekanntmachung des Hinweises auf die Patenterteilung: **18.01.2017**
(21) Anmeldenummer: 13189207.7
(22) Anmeldetag: 18.10.2013
(51) Int. Cl.: B23K 37/02, B23K 26/06, B29C 65/16, B23K 26/08, B23K 26/24

(54) **Vorrichtung zum Verbinden zweier Werkstückteile mit Bereichen unterschiedlicher Eigenschaften mittels Laser-Durchstrahlschweißen und eines Homogenisierers**
Device for connecting two work pieces with areas of different properties using transmission laser beam welding and a homogeniser
Dispositif permettant de relier deux parties de pièce ayant des zones de propriétés différentes au moyen de soudage laser par transparence et un homogénéiseur

(30) Priorität: 24.10.2012 DE 102012110165
(43) Veröffentlichungstag der Anmeldung: 30.04.2014
(73) Patentinhaber: JENOPTIK Automatisierungstechnik GmbH, 07745 Jena (DE)
(72) Erfinder: Wollmann, Werner, 07747 Jena (DE); Steiner, Christoph, 07743 Jena (DE); Krämer, Wilfried, 07747 Jena (DE); Voitsch, Alexander, 07745 Jena (DE)
(74) Vertreter: Schaller, Renate

(56) Entgegenhaltungen:
- EP-A1- 0 282 593
- EP-A1- 2 322 311
- EP-A1- 2 591 910
- DE-A1- 10 046 361
- DE-A1- 10 339 636
- DE-A1-102010 007 717
- JP-A- H09 162 248

## Beschreibung

Die Erfindung betrifft eine Vorrichtung zum Verbinden von bevorzugt großflächig ausgedehnten Werkstückteilen über Schweißnähte mittels Durchstrahlschweißen gemäß dem Oberbegriff des Anspruchs 1 (siehe, z.B., DE10 2010 007 717 A1).

Grundsätzlich werden zum Durchstrahlschweißen zwei miteinander zu verbindende Werkstückteile so aneinandergefügt, dass sich diese entlang wenigstens eines Kontaktbereiches unmittelbar berühren. Nur innerhalb eines solchen Kontaktbereiches können die Werkstückteile miteinander verschweißt werden. Die entstehenden Schweißverbindungen können punkt-, linien- oder flächenförmig sein. Der Bereich über den die Schweißverbindung entsteht, wird häufig auch als Fügebereich bezeichnet. Beim Durchstrahlschweißen ist das erste Werkstückteil für die Laserstrahlung transmittierend und einer Laserquelle zugewandt. Das zweite Werkstückteil ist für die Laserstrahlung absorbierend. Die Laserstrahlung durchdringt das erste Werkstückteil, trifft auf die Oberflächen des zweiten Werkstückteils, wird in einem an die Oberfläche angrenzenden Bereich absorbiert und in Wärmeenergie umgewandelt. Der betreffende Bereich des zweiten Werkstückteils schmilzt auf, wobei es durch Wärmeleitung auch zum Aufschmelzen eines angrenzenden Bereiches des ersten Werkstückteils und damit zu einer stoffschlüssigen Verbindung beider Werkstückteile zu einem Werkstück kommt.

Sollen beide Werkstückteile über einen Fügebereich miteinander verbunden werden, der kleiner dem Kontaktbereich ist, so muss das Auftreffen der Laserstrahlung auf den Fügebereich begrenzt werden, um ein Verschweißen auch anderer Bereiche innerhalb des Kontaktbereiches zu vermeiden.

In der Patentschrift EP 997 261 B9 ist ein Verfahren offenbart, mit dem zwei Werkstückteile mittels Durchstrahlschweißen in Fügebereichen miteinander verbunden werden. Dabei wird die freie Oberfläche eines transmittierenden Werkstückteils von einer laserlichtundurchlässigen Maske abgedeckt und die Maske durch Laserstrahlung in Form eines Laservorhangs beaufschlagt, der durch Kollimation und Fokussierung von Laserstrahlung einer oder mehrerer Laserquellen erzeugt wird. Die Maske ist korrespondierend zu den Fügebereichen durchbrochen, womit diejenigen Bereiche des Kontaktbereiches abgeschattet werden, die nicht miteinander verbunden werden sollen. Die durch die Maske abgeschattete Laserstrahlung wird reflektiert.

Die Laserstrahlung trifft entlang einer Laserlinie auf der Oberfläche des absorbierenden Werkstückteils auf, wobei die Laserlinie durch die Gestaltung der Maske in Linienabschnitte untergliedert sein kann. Ist die Maske korrespondierend zu einem Linienabschnitt durchbrochen, so wird der Linienabschnitt mit der vollen Leistung der Laserstrahlung beleuchtet; bei nicht durchbrochener Maske bleibt der betreffende Linienabschnitt unbeleuchtet. Die Werkstückteile und die Laserlinie werden relativ zueinander bewegt, womit die Laserlinie über die Fügebereiche geführt wird. Dabei wird die Laserlinie ständig an die Lage und die Ausdehnung der zu einem Zeitpunkt überstrichenen Fügebereiche angepasst. Die Ausdehnung des Laservorhangs, und damit die maximale Ausdehnung der Laserlinie, kann durch eine Änderung des Arbeitsabstandes von Laserquelle und Maske eingestellt werden. Zudem kann die Energiedichte der Laserlinie dadurch angepasst werden, dass die Leistung der Laserstrahlung verändert wird.

Es ist energetisch ungünstig, dass ein Teil der emittierten Laserstrahlung nicht genutzt und außerdem mehr oder minder diffus reflektiert wird, was eine erhöhte thermische Belastung der Vorrichtung bzw. der Laserquelle bedeutet und zusätzliche Arbeitsschutzmaßnahmen erforderlich macht. Außerdem kann es für verschiedene Anwendungen von Nachteil sein, dass keine Mittel vorgesehen sind, mit denen Einfluss auf die Leistungsdichteverteilung der Laserstrahlung auf der Werkstückoberfläche genommen werden kann.

Eine Vorrichtung bei welcher diese Nachteile behoben werden, ist aus der Offenlegungsschrift DE 100 07 391 A1 bekannt. Mit der hier vorgestellten Vorrichtung kann sowohl auf die Leistungsdichteverteilung als auch auf die Form des auf dem Werkstück erzeugten Brennflecks Einfluss genommen werden.

Hierzu wird ein flächiger und ortsauflösender Strahlmodulator zur Generierung einer vorgebbaren Leistungsdichteverteilung zwischen Laserstrahlquelle und Werkstück angeordnet. Die durch den Strahlmodulator erreichte Ortsauflösung wird durch eine in einer Ebene angeordnete Matrix aus einzeln ansteuerbaren Zellen erreicht, welche senkrecht zu dieser Ebene im Strahlengang der Laserstrahlquelle angeordnet ist. Je nach Anzahl dieser Zellen wird eine von der Laserstrahlquelle kommende Laserstrahlung in einzelne Teilstrahlen zerteilt. Mit jeder dieser voneinander unabhängigen Zellen kann die Transmission des entsprechenden Teilstrahls beeinflusst werden. Somit kann im Bereich der Matrix die Leistungsdichteverteilung des gesamten Laserstrahls über den Kanalquerschnitt gezielt eingestellt werden, bevor er auf das Werkstück trifft.

Zur Modulierung der Teilstrahlen weisen die Zellen entweder einen beweglichen Mikrospiegel oder einen Mikro-Polarisator auf oder sind als Flüssigkristallzellen ausgeführt. Mit diesen Einrichtungen kann die Transmission jeder Zelle stufenlos von maximalem Durchlass bis zur vollständigen Strahlunterbrechung eingestellt werden. Daraus ergeben sich vielfältige Möglichkeiten bei der sequentiellen oder simultanen Materialbearbeitung. In einer Ausführung der Vorrichtung erfolgt beispielsweise eine simultane Bearbeitung des Werkstücks auf einer vom Strahlmodulator begrenzten Fläche dadurch, dass zeitgleich nur die Teilstrahlen freigegeben werden, die zur Bearbeitung einer flächig auf dem Werkstück angeordneten Kontur erforderlich sind. Durch eine Abstufung der Transmission der einzelnen freigegebenen Zellen untereinander, erfolgt gleichzeitig die Einstellung einer gleichmäßigen Leistungsdichteverteilung im Verlauf der gesamten Kontur.

Da der Strahlmodulator direkt im Strahlengang angeordnet ist, müssen die zu seinem Aufbau verwendeten Materialien eine möglichst hohe Zerstörungsschwelle aufweisen. Um zu verhindern, dass eine auf den Strahlmodulator auftreffende Laserstrahlung, die in der Regel Inhomogenitäten in ihrem Strahlprofil aufweist, die punktuell bereits nahe der Zerstörschwelle liegen können, und um den Dynamikbereich des Strahlmodulators zu erhöhen, sind zusätzliche Maßnahmen nötig, welche die Laserstrahlung bereits vor dem Auftreffen auf den Strahlmodulator homogenisieren. Die hohen Ansprüche an die Materialeigenschaften und an den funktionellen Aufbau des Strahlmodulators, der Einsatz von zusätzlichen Optiken zum Homogenisieren der auf den Strahlmodulator treffenden Laserstrahlung und die Erstellung einer erforderlichen Steuerung lassen einen nicht unerheblichen Aufwand bei der Herstellung der Vorrichtung vermuten. Außerdem ist das hier zur Anwendung kommende Prinzip nur bei der Bearbeitung kleinerer Werkstücke sinnvoll anwendbar.

Bei einer in der Offenlegungsschrift DE 10 2010 007 717 A1 offenbarten Vorrichtung wird eine deutlich einfachere Möglichkeit beschrieben, mit der die Verbindung zweier flächiger Werkstückteile über einen großflächig ausgedehnten Kontaktbereich in mehreren Fügebereichen mittels einer linienförmigen Laserstrahlquelle, bestehend aus mehreren, einzeln ansteuerbaren Einzelstrahlern, ohne Verwendung einer Maske erfolgen kann.

Die Vorrichtung umfasst einen Träger (hier: Aufnahme), der dazu ausgelegt ist, zwei in x-y-Richtung flächig ausgedehnte Werkstückteile zueinander zu positionieren, ein auf die Aufnahme gerichtetes, in x-Richtung ausgerichtetes Linienarray (hier: Laserstrahlquelle), bestehend aus einer Vielzahl von einzeln ansteuerbaren Einzelstrahlern, bevorzugt Laserstrahlemittern, die gemeinsam ein Linienarray bilden, eine Einrichtung zum relativen Transportieren des Linienarrays zur Aufnahme in y-Richtung sowie eine Steuerung zum ortsaufgelösten Betreiben der Einzelstrahler. Gemäß einem Ausführungsbeispiel besteht das Linienarray aus Laserdioden, die nebeneinander in Richtung ihrer slow-axis angeordnet sind und deren Laserstrahlung in fast-axis Richtung durch eine in Abstrahlrichtung, die der z-Richtung entspricht, vorgeordnete Zylinderlinse kollimiert wird.

Das den Kontaktbereich in einer Ausdehnungsrichtung komplett überspannende Linienarray erzeugt einen Laservorhang, der gegenüber den Werkstückteilen eine Relativbewegung vollzieht und dabei den kompletten Kontaktbereich in seiner zweiten Ausdehnungsrichtung überstreicht. Über eine gezielte Ansteuerung der einzelnen Laserdioden während der Relativbewegung werden ausschließlich die Fügebereiche innerhalb des Kontaktbereiches mit einer entsprechenden Laserleistung beaufschlagt. Bereiche außerhalb der Fügebereiche bleiben von der Laserleistung unbeeinflusst und brauchen daher nicht maskiert zu werden.

Damit konnte eine energetisch vergleichsweise günstige Lösung zum Schweißen größerer Werkstücke gefunden werden. Die Laserstrahlung trifft jedoch unbeeinflusst auf die Werkstückteile auf, weshalb diese in der Regel eine inhomogene Leistungsdichteverteilung in Form eines Gaußprofils aufweisen. Dadurch ist es nicht möglich, scharf konturierte Fügebereiche mit einer homogenen Schmelze, z. B. in Form von schmalen, geschlossenen Schweißnähten zu erzeugen. Anforderungen an scharf begrenzte Fügebereiche werden in der Regel gestellt, wenn die Fügebereiche visuell wahrnehmbar sind und das Erscheinungsbild eines Werkstückes mitbestimmen. Anforderungen an eine homogene Schmelze werden gestellt, wenn die Werkstückteile abdichtend miteinander verbunden werden sollen.

In der nicht vorveröffentlichten DE 10 2011 055 203.0 ist eine Vorrichtung zum Verbinden zweier Werkstückteile mittels Durchstrahlschweißen beschrieben, bei der einer Laserstrahlquelle in Strahlungsrichtung ein Homogenisierer nachgeordnet ist, der wenigstens einen in z-Richtung durchgängigen Reflexionskanal aufweist, welcher in seiner Querschnittsform und seiner Anordnung dem Verlauf einer gewünschten Schweißnaht entspricht, wie sie in zwei miteinander zu verbindende, unter dem Homogenisierer positionierte Werkstückteile eingebracht werden soll. Die Laserstrahlquelle umfasst eine Vielzahl ein Linienarray bildende und einzeln ansteuerbare Einzelemitter. Das Linienarray ist in x-Richtung ausgerichtet und ist relativ zum Homogenisierer in y-Richtung verfahrbar.

Der Homogenisierer selbst ist für die Laserstrahlung nicht transparent, sodass er diese lediglich durch die Reflexionskanäle auf die Werkstückteile weiterleitet. Vorteilhaft sollen die Einzelemitter zeitweise angesteuert werden, während deren Strahlung in einen Reflexionskanal eingekoppelt wird.

Die Reflexionskanäle weißen zueinander parallele oder auch schräg gestellte Kanalwände auf. Der Homogenisierer kann auch als Andruckkörper zur Erzeugung eines Schweißdruckes zwischen den beiden Werkstückteilen dienen.

Durch die EP 0 282 593 A1 ist ein Homogenisierer offenbart, der einer Laserquelle in Abstrahlrichtung vorgeordnet ist, sodass die Laserstrahlung durch den Homogenisierer auf zu verbindende Werkstücke gerichtet ist. In dem Homogenisierer sind reflektierende Kanalwandflächen angeordnet, die um einen Winkel angewinkelt werden können, wodurch Mehrfachreflexionen der Laserstrahlung bewirkt sind. Durch eine Einstellung des Winkels ist zugleich in gewissen Grenzen eine Verteilung der Laserleistung auf dem Werkstück beeinflussbar. Zur erforderlichen Kühlung des Homogenisierers sind Kühlkanäle vorgesehen, in denen Wasser als Kühlmittel geführt ist. Da diese Art der Kühlung einen Anschluss an entsprechende Versorgungsleitungen bedingt, sind die realisierbaren Winkel beschränkt.

Das Dokument DE 100 46 361 A1 offenbart eine Vorrichtung zum Durchstrahlschweißen, bei der Laserstrahlung einer ersten Intensitätsverteilung mittels eines Strahlformungsmittels, welches auch als Homogenisierer wirkt, in Laserstrahlung einer zweiten Intensitätsverteilung überführt wird.

Die Offenbarung der DE 100 46 361 A1 besagt, dass eine homogene Verteilung einer Laserstrahlung und damit eine homogene und gleichmäßige Schweißnaht dadurch erreicht werden kann, dass die Laserstrahlung durch eine Anzahl nebeneinander angeordneter Langlöcher einer Lochblende gerichtet wird. Sich überlagernde Randstrahlen addieren sich hinsichtlich ihrer Wirkung auf, wodurch eine recht gleichmäßige Laserlinie erzielbar ist.

Es ist aus keiner der vorbenannten Vorrichtungen zu entnehmen, dass diese zum Verschweißen von Werkstückteilen geeignet oder vorgesehen wären, die über ihre Ausdehnung eine unterschiedliche Materialdicke aufweisen, aus unterschiedlichem Material bestehen oder aber Schweißnähte, in unterschiedlichen Schweißebenen und damit unterschiedlichen Abständen zur Laserstrahlquelle, aufweist.

Der Erfindung liegt die Aufgabe zugrunde eine Vorrichtung zum Durchstrahlschweißen, bevorzugt großflächig ausgedehnter Werkstückteile mit unterschiedlicher Materialdicke und/oder aus unterschiedlichen Materialien bestehend, zu schaffen, mit der reproduzierbare Schweißnähte, mit einer scharfen Begrenzung und einer homogenen Schmelze hergestellt werden können.

Es sollen auch bevorzugt großflächig ausgedehnte Werkstückteile durch Schweißnähte, in genannter Qualität, in unterschiedlichen Schweißebenen verbunden werden können. Die Vorrichtung soll darüber hinaus einen einfachen Aufbau aufweisen und eine schnelle Durchführung des Schweißverfahrens mit einem einmaligen Überstreichen der Werkstückteile durch die Laserstrahlung ermöglichen.

Die Aufgabe der Erfindung wird für eine Vorrichtung zum Verbinden zweier Werkstückteile zu einem Werkstück mittels Durchstrahlschweißen, über in einem vorgegebenen Schweißnahtmuster, in Bereichen unterschiedlicher Eigenschaften der Werkstückteile, verlaufende Schweißnähte, mit einer Aufnahme, die dazu ausgelegt ist, zwei in x-y-Richtung ausgedehnte Werkstückteile zueinander in x-, y- und z-Richtung eines kartesischen Koordinatensystems zu positionieren, mit einer auf die Aufnahme und damit auf in dieser positionierte Werkstückteile mit ihrer Abstrahlrichtung ausgerichteten Laserstrahlquelle, bestehend aus einer Vielzahl von einzeln ansteuerbaren, in x-Richtung nebeneinander angeordneten Laserstrahlemittern, mit einer Transporteinrichtung zum relativen Transportieren der Laserstrahlquelle zur Aufnahme in y-Richtung, sowie mit einer Speicher- und Steuereinheit gelöst, wobei der Laserstrahlquelle in Abstrahlrichtung ein Homogenisierer nachgeordnet ist, in dem wenigstens zwei zueinander parallel in y-Richtung verlaufende, den Homogenisierer in z-Richtung mit einer Kanaltiefe vollständig durchdringende Reflexionskanäle vorgesehen sind, die entsprechend einem vorgegebenen Schweißnahtmuster dimensioniert und zueinander angeordnet sind, und den wenigstens zwei Reflexionskanälen Laserstrahlemitter unterschiedlicher Laserleistung zugeordnet sind.

Die erfindungsgemäße Vorrichtung offenbart weiter, dass die Kanalwandflächen zur Abstrahlrichtung der Laserstrahlquelle angewinkelt angeordnet sind, sodass die an den Kanalwandflächen reflektierte Laserstrahlung einen steileren Reflexionswinkel aufweist, wodurch die Anzahl der Reflexionen der Laserstrahlung steigerbar ist. Zudem sind die einen Reflexionskanal bildenden Kanalwandflächen im Homogenisierer einzeln austauschbar und frei positionierbar, siehe Anspruch 1.

Dabei weisen die Reflexionskanäle sich gegenüberliegende reflektierende Kanalwandflächen auf, an denen wenigstens ein Teil der von dem zugeordneten Laserstrahlemitter kommenden Laserstrahlung mehrfach hin- und herreflektiert wird. Die Laserstrahlemitter unterschiedlicher Laserleistung umfassen, wenigstens Laserstrahlemitter einer vergleichsweise geringeren Laserleistung und Laserstrahlemitter einer vergleichsweise höheren Leistung. Bei einer gleichen Einwirkdauer jeweils emittierender Laserstrahlung können so zeitgleich parallele Schweißnähte gleicher Qualität in Bereichen unterschiedlicher Eigenschaften der Werkstückteile erzeugt werden.

Es ist auch von Vorteil unmittelbar aneinander angrenzende und angewinkelte Kanalwandflächen in einer entgegen der Abstrahlrichtung der Laserstrahlquelle gerichteten gemeinsamen, sich zu einer Spitze verjüngenden Kante auslaufend anzuordnen, um Laserleistungsverluste zu vermeiden.

Es ist auch von Vorteil, wenn der Homogenisierer einen modularen Aufbau aus Baugruppen aufweist, die an die Bereiche unterschiedlicher Eigenschaften angepasst sind.

Die Erfindung soll nachfolgend anhand von Ausführungsbeispielen näher erläutert werden. In den dazugehörigen Zeichnungen zeigen:
- Fig. 1: den prinzipiellen Aufbau einer erfindungsgemäßen Vorrichtung,
- Fig. 2: den prinzipiellen Aufbau der Vorrichtung zum Verschweißen von Werkstückteilen mit Bereichen unterschiedlichen Materials und
- Fig. 3: den prinzipiellen Aufbau der Vorrichtung zum Verschweißen von Werkstückteilen mit Bereichen in unterschiedlichen Schweißebenen.

Die Vorrichtung ist an unterschiedliche Eigenschaften zweier miteinander zu verbindender Werkstückteile, von denen das eine ein für eine Laserstrahlung 22 einer ausgewählten Laserstrahlquelle 2 transparentes Werkstückteil 11 und das andere ein für die Laserstrahlung 22 absorbierendes Werkstückteil 12 ist, in einfacher Weise anpassbar.

Um die unterschiedlichen Eigenschaften an den Werkstückteilen 11 oder 12 beschreiben zu können, werden die Werkstückteile 11, 12 im Folgenden in einen ersten Bereich B1 und in einen zweiten Bereich B2 unterteilt, in denen sie sich in mindestens einer oder auch in mehreren Eigenschaften unterscheiden können.

Die beiden Werkstückteile 11, 12 können jeweils oder auch nur eines davon aus Bereichen B1, B2 unterschiedlichen Materials bestehen, welche eine unterschiedliche Wärmeleitfähigkeit, und/oder eine unterschiedliche Wärmekapazität aufweisen und/oder für die verwendete Laserstrahlung 22 unterschiedlich absorbierend sind. Um in den Bereichen B1, B2 unterschiedlichen Materials Schweißnähte 13 gleicher Qualität herzustellen, bedarf es dann eines unterschiedlich großen Energieeintrages.

Die Werkstücketeile 11, 12 können jeweils oder auch nur eines davon sogenannte 3D-Teile sein, die angeordnet in einer Aufnahme 4 der Vorrichtung in Richtung der Laserstrahlung 22 wenigstens zwei Bereiche B1, B2, entweder einer unterschiedlichen Dicke oder eines unterschiedlichen Abstands zur Laserstrahlquelle 2 der Vorrichtung aufweisen. Trifft erstgenanntes auf das transparente Werkstückteil 11 zu, trifft die Laserstrahlung 22, aufgrund unterschiedlicher Transmission im transparenten Werkstückteil 11 mit unterschiedlichen Intensitäten auf dem absorbierenden Werkstückteil 12 auf. Trifft zweitgenanntes auf das absorbierende Werkstückteil 12 zu, trifft die Laserstrahlung 22, aufgrund unterschiedlicher Entfernungen zur Laserstrahlquelle 2, ebenfalls mit unterschiedlichen Intensitäten auf dem absorbierenden Werkstückteil 12 auf.

Um Werkstückteile mit wenigstens zwei Bereichen B1, B2 unterschiedlicher Eigenschaften, wie sie vorgenannt erläutert wurden, über die Schweißnähte 13 gleicher Qualität zu verbinden, muss auf die Bereiche B1, B2 unterschiedlicher Eigenschaften Laserstrahlung 22 gleicher Intensität über eine unterschiedlich lange Einwirkdauer oder Laserstrahlung 22 unterschiedlicher Intensität über eine gleiche Einwirkdauer gerichtet werden. Um die Schweißnähte 13 während einer einmaligen Relativbewegung R mit gleichem Richtungssinn zwischen der Laserstrahlung 22 und den in der Aufnahme 4 zueinander und zur Laserstrahlung 22 positionierten Werkstückteilen 11, 12 herzustellen, werden die Schweißnähte 13 als geradlinige, zueinander rechtwinklig und parallelverlaufende Schweißnähte 13 ausgeführt, wobei jede Schweißnaht 13 nur über einen der Bereiche B1, B2 unterschiedlicher Eigenschaften verläuft. Zu diesem Zweck umfasst ein an späterer Stelle ausführlich beschriebener Homogenisierer 3, der in z-Richtung der Vorrichtung, gleich der Abstrahlrichtung der Laserstrahlquelle 2, der Laserstrahlquelle 2 nachgeordnet ist, wenigstens zwei Reflexionskanäle 33 die parallel zueinander in y-Richtung der Vorrichtung verlaufen. Alle Reflexionskanäle 33 bilden zusammen ein Schweißnahtmuster gleich dem Muster, welches durch alle Schweißnähte 13 gebildet wird.

Auf diese Weise kann die Laserstrahlquelle 2, bestehend aus einer Vielzahl von einzeln ansteuerbaren, in x-Richtung nebeneinander angeordneten Laserstrahlemittern entweder durch Abstrahlung von Laserstrahlung 22 unterschiedlicher Intensität über eine gleiche Einwirkdauer oder durch Abstrahlung von Laserleistung 22 gleicher Intensität über eine unterschiedliche Einwirkdauer Schweißnähte 13 gleicher Qualität in die Bereiche B1, B2 unterschiedlicher Eigenschaften der Werkstückteile 11, 12 einbringen.

Zur Herstellung von in y-Richtung parallel verlaufenden Schweißnähten 13 in die Bereiche B1, B2 wird die Laserstrahlquelle 2 so konzipiert, dass sie für unterschiedliche Laserleistung ausgelegte Laserstrahlemitter umfasst. Das heißt die Laserstrahlquelle 2 umfasst wenigstens zwei Gruppen von Laserstrahlemittern 21.1, 21.2 unterschiedlicher Laserleistung, nämlich Laserstrahlemitter vergleichsweise höherer Laserleistung 21.1 und Laserstrahlemitter vergleichsweise geringerer Laserleistung 21.2, wobei eine Gruppe hier auch nur aus einem einzelnen Laserstrahlemitter 21.1 oder 21.2 bestehen kann.

Um mit einer solchen Laserstrahlquelle 2 in x-Richtung geradlinig verlaufende Schweißnähte 13 in den Bereichen B1, B2 unterschiedlicher Eigenschaften herzustellen, wird ein gleichmäßiger Energieeintrag entlang der Schweißnähte 13 über eine differenzierte Einschaltdauer der einzelnen Laserstrahlemitter 21.1; 21.2 der Gruppen verwendet.

Ein vorteilhaftes Ausführungsbeispiel für eine erfindungsgemäße Vorrichtung zur Herstellung von mehreren zueinander parallel und mehreren hierzu rechtwinklig verlaufenden Schweißnähten 13 in den Bereichen B1, B2 unterschiedlicher Eigenschaften wird nachfolgend beschrieben.

Mit dieser ersten Ausführungsform einer Vorrichtung kann z. B. ein Werkstück geschweißt werden, bei dem Bereiche B1, B2 unterschiedlicher Eigenschaften von rechteckig in x- und y-Richtung flächig ausgedehnten Werkstückteilen 11, 12 durch die unterschiedlichen Dicken des transparenten Werkstückteils 11 gebildet werden. Das transparente Werkstückteil 11 weist einen ersten Bereich B1 mit einer vergleichsweise größeren Dicke d1 und einen zweiten Bereich B2 mit einer vergleichsweise kleineren Dicke d2 auf.

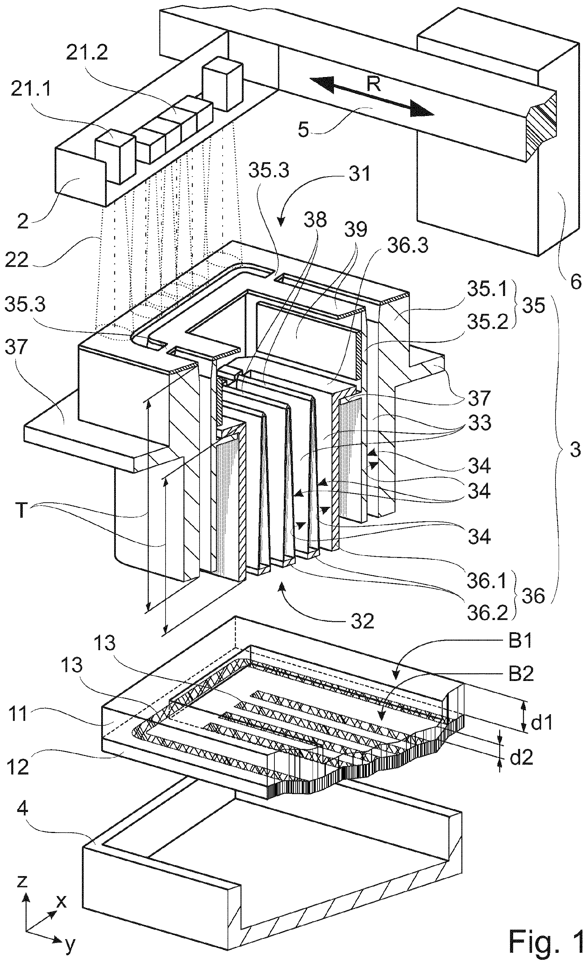

In Fig. 1 ist eine erfindungsgemäße Vorrichtung gemäß dem ersten Ausführungsbeispiel dargestellt. Alle Ausführungsformen der Vorrichtung umfassen im Wesentlichen eine Laserstrahlquelle 2, einen Homogenisierer 3, eine Aufnahme 4 zum Halten der zu verbindenden Werkstückteile 11, 12, eine Transporteinrichtung 5 und eine Speicher- und Steuereinheit 6. Die Ausführungsformen unterscheiden sich in der Gestaltung des Homogenisierers und in der Ausführung der Laserstrahlquelle 2.

Wie in Fig. 1 dargestellt, weist die Vorrichtung den Homogenisierer 3 auf, der zur Erzeugung des Musters der Schweißnähte 13 verwendet wird. Der Homogenisierer 3 ist ein in der Regel quaderförmiges Werkzeug, das entsprechend der Ausdehnung und der dreidimensionalen Form der Werkstückteile 11, 12, sowie des Musters der Schweißnähte 13 gestaltet ist. Er ist zwischen der in z-Richtung auf die Aufnahme 4 gerichteten Laserstrahlquelle 2 und dem in der Aufnahme 4 befindlichen transparenten Werkstückteil 11 angeordnet und kanalisiert die von der Laserstrahlquelle 2 ausgehende Laserstrahlung 22, entsprechend des Musters der Schweißnähte 13, durch die Reflexionskanäle 33 auf die Werkstückteile 11, 12.

Je nach Muster der Schweißnähte 13 weist der Homogenisierer 3 eine entsprechende Anzahl von Reflexionskanälen 33 auf. Die Reflexionskanäle 33 durchlaufen den Homogenisierer 3 in z-Richtung, von einer zur Laserstrahlquelle 2 gerichteten Oberseite 31 bis zu einer dem transparenten Werkstückteil 11 zugewandten Unterseite 32 des Homogenisierers 3, sodass die ebenfalls in z-Richtung abgegebene Laserstrahlung 22 in die Reflexionskanäle 33 einstrahlt und auf den Werkstückteilen 11, 12 auftreffen kann. Alle anderen Bereiche des Homogenisierers 3 sind für die verwendete Laserstrahlung 22 nicht transparent und schirmen die Werkstückteile 11, 12 gegenüber der Laserstrahlung 22 ab. Aus diesem Grund ist der Homogenisierer 3 auch mindestens so groß ausgeführt, dass er die Werkstückteile 11, 12 in deren x- und y-Ausdehnung abdecken kann.

Die auf der Unterseite 32 verbleibenden Flächen des Homogenisierers 3, zwischen den Öffnungen der Reflexionskanäle 33, können auf dem transparenten Werkstückteil 11 aufgesetzt werden. Der Homogenisierer 3 kann damit gleichzeitig als ein Niederhalter für die beiden Werkstückteile 11, 12 verwendet werden, mit dem ein für das Zustandekommen der Schweißverbindung benötigter Nullspalt zwischen den aufeinanderliegenden und zu verschweißenden Oberflächen der Werkstückteile 11, 12 eingestellt wird und mit dem die Werkstückteile 11, 12 in der Aufnahme 4 fixiert werden.

Um die Werkstückteile 11, 12 in einer definierten und stabilen Lage zueinander und gegenüber der Laserstrahlquelle 2 zu positionieren, weist die Aufnahme 4 eine Vertiefung mit einer ebenen Bodenfläche und mit einer senkrecht dazu stehenden Umrandung auf, in die zunächst das absorbierende Werkstückteil 12 und darüber das transparente Werkstückteil 11 eingelegt ist.

Entsprechend den Bereichen B1, B2 unterschiedlicher Eigenschaften, ist der Homogenisierer 3 in Fig. 1 aus zwei dementsprechend angepassten Baugruppen aufgebaut.

Eine für den Bereich B1 angepasste erste Baugruppe 35, mit der eine im Randbereich der Werkstückteile 11, 12 umlaufende Schweißnaht 13 erzeugt wird, bestimmt somit die Außenabmessungen des Homogenisierers 3 und bildet gleichzeitig einen Träger für weitere Baugruppen. In der Regel wird auch in anderen Ausführungen der Vorrichtung die äußere Baugruppe des Homogenisierers 3 als Träger verwendet, da so ein ungehinderter Zugang der Laserstrahlung 22 zu weiteren Baugruppen gewährleistet ist.

Die erste Baugruppe 35 besteht aus einer senkrechten inneren Kanalwand 35.2 und einer äußeren Kanalwand 35.1, wobei die innere Kanalwand 35.2 innerhalb der äußeren Kanalwand 35.1 angeordnet ist und ein umlaufender Abstand zwischen den Kanalwänden 35.1 und 35.2 verbleibt. Durch die sich parallel gegenüberstehenden Kanalwände 35.1; 35.2 der ersten Baugruppe 35 wird der Reflexionskanal 33 für die umlaufende Schweißnaht 13 im Bereich B1 gebildet. Die Kanalwände 35.1; 35.2 weisen eine hohe Oberflächengüte auf und sind als die Laserstrahlung 22 reflektierende Kanalwandflächen 34 ausgeführt. Die mechanische Verbindung zwischen den beiden beabstandeten Kanalwänden 35.1; 35.2 der ersten Baugruppe 35 wird über vier schmale Stege 35.3 hergestellt, die unmittelbar an die Oberseite 31 des Homogenisierers 3 angrenzend, innerhalb des Reflexionskanals 33 angeordnet sind.

Entsprechend der rechteckigen Form der Werkstückteile 11, 12 und des in Fig. 1 gezeigten Schweißnahtmusters besteht der Reflexionskanal der ersten Baugruppe 35 im Wesentlichen aus zwei parallelen, in x-Richtung orientierten und zwei parallelen, in y-Richtung orientierten linearen Abschnitten, die an den Enden aufeinandertreffen und mit radienförmigen Übergängen verbunden sind. Die Radien sind dabei so klein wie möglich ausgeführt, sodass sie beim später beschriebenen Anpassen der Intensität oder der Einwirkdauer der Laserstrahlung 22 am Übergang zwischen den Bereichen B1, B2 unterschiedlicher Eigenschaften nicht weiter beachtet werden müssen.

Die der Laserstrahlung 22 ausgesetzten Flächen der Oberseite 31 der ersten Baugruppe 35 sind mit einem thermisch unempfindlichen Strahlabsorber 39 abgedeckt, um eine Aufheizung des Homogenisierers 3 zu vermeiden. Für eine möglichst scharf begrenzte Ausbildung der Schweißnaht 13 werden die Kanalwandflächen 34 bis unmittelbar auf die Oberseite des transparenten Werkstückteils 11 geführt. Der Abstand zwischen den Kanalwandflächen 34 an der Unterseite 32 des Homogenisierers 3 bestimmt die Breite der Schweißnaht 13.

Für die Aufnahme des Homogenisierers 3 in der Vorrichtung weisen die außen liegenden Mantelflächen der äußeren Kanalwand 35.1 einen waagerecht angeordneten, umlaufenden Flansch 37 auf, an dem der Homogenisierer 3 befestigt werden kann. Für die Aufnahme weiterer Baugruppen ist die zum Zentrum der ersten Baugruppe 35 weisende Innenfläche der inneren Kanalwand 35.2 ebenfalls mit einem waagerecht angeordneten, umlaufenden Flansch 37 versehen, der als Träger für weitere Baugruppen verwendet wird.

Mit einer zweiten, im Inneren der ersten Baugruppe 35 angeordneten zweiten Baugruppe 36, werden die an den Bereich B2 der Werkstückteile 11, 12 angepassten Schweißnähte 13 erzeugt.

Die zweite Baugruppe 36 enthält einen Rahmen 36.3, der auf dem Flansch 37 an der Innenfläche der inneren Kanalwand 35.2 der ersten Baugruppe 35 aufgelegt und befestigt wird. Die äußere Begrenzung der Schweißnähte 13 innerhalb des Bereichs B2 erfolgt durch eine senkrechte und entsprechend des Rahmens 36.3 umlaufende äußere Kanalwand 36.1 der zweiten Baugruppe 36, die sich vom Rahmen 36.3 ausgehend, in z-Richtung bis auf die Oberfläche des transparenten Werkstückteils 11 erstreckt. Die äußere Kanalwand 36.1 der zweiten Baugruppe 36 bildet eine Art Lichtschacht, durch den die Laserstrahlung 22 im Bereich B2 auf die Werkstückteile 11, 12 auftreffen kann. Die Innenseite der äußeren Kanalwand 36.1 der zweiten Baugruppe 36 bildet dabei die für die Laserstrahlung 22 hochreflektierende Kanalwandfläche 34 aus.

Aufgrund der großen Fläche, welche die den Lichtschacht bildende äußere Kanalwand 36.1 der zweiten Baugruppe 36 einschließt, werden im Bereich B2 mehrere Schweißnähte 13 zum Herstellen einer Schweißverbindung zwischen den Werkstückteilen 11 und 12 benötigt. Das Muster besteht aus mehreren in y-Richtung orientierten linearen Schweißnähten 13, die in regelmäßigen Abständen über die Fläche des Bereichs B2 verteilt sind. Da die Schweißnähte 13 eines Musters immer rechtwinklig zueinander angeordnet sind, spielt es prinzipiell keine Rolle, ob diese in x-oder in y-Richtung orientiert sind, solange durch die Gestaltung des Musters der Schweißnähte 13 eine gewünschte Festigkeit der Schweißverbindung erreicht werden kann.

Um im Bereich B2 die in regelmäßigen Abständen parallel in y-Richtung verlaufenden Schweißnähte 13 zu erzeugen, wird der Lichtschacht in einzelne Reflexionskanäle 33 aufgeteilt. Die Aufteilung erfolgt mittels senkrechter innerer Kanalwände 36.2, die in y-Richtung ausgerichtet sind. Die inneren Kanalwände 36.2 der zweiten Baugruppe 36 werden, entsprechend des zu erzeugenden Musters der einzelnen, den Bereich B2 ausfüllenden, Schweißnähten 13 entweder von der Oberseite 31 her in den Lichtschacht eingehangen und auf dem Rahmen 36.3 befestigt oder von der Unterseite 32 her in den Lichtschacht eingesetzt und mit der äußeren Kanalwand 36.1 der zweiten Baugruppe 36 verbunden. Durch diese Art der Aufteilung wird eine einfache und flexible Gestaltung des Musters der Schweißnähte 13 im Bereich B2 ermöglicht.

Die reflektierenden Kanalwandflächen 34 werden mittels polierter Bleche realisiert, mit denen die als Haltestruktur dienenden inneren Kanalwände 36.2 der zweiten Baugruppe 36 verkleidet werden. Durch die verbleibenden Abstände zwischen den sich gegenüberstehenden Kanalwandflächen 34 zweier innerer Kanalwände 36.2 an der Unterseite 32 der zweiten Baugruppe 36, wird die Breite der Schweißnähte 13 im Bereich B2 eingestellt.

Entsprechend der Differenz aus der vergleichsweise größeren Dicke d1 im Bereich B1 und der vergleichsweise kleineren Dicke d2 im Bereich B2 des transparenten Werkstückteils 11 ragen die Kanalwände 36.1 und 36.2 der zweiten Baugruppe 36 an der Unterseite 32 in z-Richtung aus der ersten Baugruppe 35 heraus. Da sich die zweite Baugruppe 36 im Inneren der ersten Baugruppe 35 befindet, ist die Oberseite 31 der zweiten Baugruppe 36 weiter von der Laserstrahlquelle 2 entfernt als die Oberseite 31 der ersten Baugruppe 35.

Die sich gegenüberstehenden Kanalwandflächen 34 zweier innerer Kanalwände 36.2 der zweiten Baugruppe 36 verlaufen nicht senkrecht, sondern sind leicht angewinkelt. Dadurch sind die zur Oberseite 31 hin gewandten Eintrittsöffnungen der Reflexionskanäle 33 größer als die zur Unterseite 32 hin gewandten Austrittsöffnungen. Der zwischen den inneren Kanalwänden 36.2 der zweiten Baugruppe 36 in x- und z-Richtung ausgebildete Querschnitt der Reflexionskanäle 33 ist somit trichterförmig. Zwischen den Austrittsöffnungen der Reflexionskanäle 33 weist die zweite Baugruppe 36 eine geschlossene Unterseite 32 auf, mit welcher der Homogenisierer 3 auf der Oberfläche des transparenten Werkstückteils 11 aufgesetzt und das transparente Werkstückteil 11 auf dem absorbierenden Werkstückteil 12 fixiert wird.

Oberhalb des Homogenisierers 3 ist die Laserstrahlquelle 2 an einer Transporteinrichtung 5 befestigt, mit der die Laserstrahlquelle 2 die in y-Richtung verlaufende Relativbewegung R gegenüber den Werkstückteilen 11, 12 und dem Homogenisierer 3 ausführen kann. Wie bereits beschrieben, besteht die Laserstrahlquelle 2 aus einzeln ansteuerbaren Laserstrahlemittern vergleichsweise höherer Laserleistung 21.1 und Laserstrahlemittern vergleichsweise geringerer Laserleistung 21.2, die in x-Richtung nebeneinander angeordnet sind. Die Anordnung der Laserstrahlemitter 21.1, 21.2 in der Laserstrahlquelle 2 erfolgt, entsprechend der Lage der Bereiche B1, B2 unterschiedlicher Eigenschaften, an den Werkstückteilen 11, 12. Der Abstand zwischen den einzelnen Laserstrahlemittern 21.1, 21.2 in x-Richtung ist so gewählt, dass jedem in y-Richtung verlaufenden Reflexionskanal 33 wenigstens ein Laserstrahlemitter 21.1 oder 21.2 zugeordnet ist.

Der Abstand in z-Richtung zwischen der Laserstrahlquelle 2 und den Werkstückteilen 11, 12 ist mindestens so groß gewählt, dass die Laserstrahlung 22 der einzelnen Laserstrahlemitter 21.1; 21.2 unmittelbar aneinander grenzt bzw. überlappend auf der Oberfläche des absorbierenden Werkstückteils 12 auftrifft, sodass eine in x-Richtung verlaufende Schweißnaht 13 bereits ohne Reflexionen der Laserstrahlung 22 an den Kanalwandflächen 34 möglichst homogen beaufschlagt werden kann.

Aufgrund der vergleichsweise größeren Dicke d1 ist der Bereich B1 des transparenten Werkstückteils 11 für die Laserstrahlung 22 weniger transparent als der Bereich B2 mit der vergleichsweise kleineren Dicke d2, sodass die Laserstrahlung 22 im Bereich B1 beim Durchdringen des transparenten Werkstückteils 11 einen höheren Intensitätsverlust aufweist als im Bereich B2. Um diesen Intensitätsverlust auszugleichen und beide Bereiche B1, B2 während der einen Relativbewegung R der Laserstrahlquelle 2 in y-Richtung möglichst geschwindigkeitsoptimiert und gleichzeitig verschweißen zu können, werden im Bereich B1 die Laserstrahlemitter vergleichsweise höherer Laserleistung 21.1 und im Bereich B2 die Laserstrahlemitter vergleichsweise geringerer Laserleistung 21.2 verwendet.

Da die umlaufende Schweißnaht 13 im Bereich B1 auch in x-Richtung verlaufende Abschnitte aufweist, die sich über die gesamte Breite des Bereichs B2 erstreckt, müsste die Laserstrahlquelle 2 theoretisch ausschließlich aus Laserstrahlemittern vergleichsweise höherer Laserleistung 21.1 aufgebaut werden, deren Intensität im Bereich B2 reduziert werden müsste. Die ausschließliche Verwendung der Laserstrahlemitter 21.1 würde jedoch auch die Herstellkosten erhöhen.

Da der Anteil des, zur Beaufschlagung der in x-Richtung orientierten Abschnitte der Schweißnaht 13, erforderlichen Wegs an der Relativbewegung nur sehr gering ist, ist die Verwendung von Laserstrahlemittern vergleichsweise höherer Laserleistung 21.1 in diesen Abschnitten nicht sinnvoll. Deshalb werden Laserstrahlemitter vergleichsweise höherer Laserleistung 21.1 nur an den in y-Richtung verlaufenden Abschnitten der Schweißnaht 13 im Bereich B1 verwendet. Die in x-Richtung verlaufenden Abschnitte der Schweißnaht 13 im Bereich B1 werden, durch Anpassung der Intensität oder der Einwirkdauer, mit den Laserstrahlemittern vergleichsweise geringerer Laserleistung 21.2 verschweißt die für die Schweißnähte 13 im Bereich B2 mit der vergleichsweise kleineren Dicke d2 vorgesehen sind. Die für dieses Schweißnahtmuster verwendbare Laserstrahlquelle 2 ist dementsprechend aus zwei äußeren, den in y-Richtung orientierten Abschnitten der Schweißnaht 13 des Bereichs B1 gegenüberstehenden Laserstrahlemittern vergleichsweise höherer Laserleistung 21.1 und, zwischen diesen Laserstrahlemittern 21.1, einer der Anzahl der Schweißnähte 13 des Bereichs B2 entsprechenden Anzahl Laserstrahlemittern vergleichsweise kleinerer Laserleistung 21.2 aufgebaut.

Um die Intensität oder Einwirkdauer in Abhängigkeit von dem in x- und y-Richtung ausgedehnten Schweißnahtmuster beeinflussen zu können, ist eine selektive Ansteuerung der jeweiligen Laserstrahlemitter 21.1 oder 21.2 und eine Steuerung der Relativbewegung R der Transporteinrichtung 5 erforderlich. Die Ansteuerung erfolgt dabei über die Speicher- und Steuereinheit 6.

Zur gleichzeitigen und geschwindigkeitsoptimierten Herstellung von qualitativ gleichwertigen Schweißnähten 13 in den Bereichen B1, B2, ist es von Vorteil, die Werkstückteile 11, 12 mit unterschiedlicher Einwirkdauer der Laserstrahlung 22 zu beaufschlagen. Dazu erfolgt in den Bereichen B1 und B2 eine entsprechende Anpassung der Geschwindigkeit der Relativbewegung R.

Am Beginn der Relativbewegung R wird dazu die Geschwindigkeit soweit reduziert, dass die von den Laserstrahlemittern vergleichsweise geringerer Laserleistung 21.2 ausgehende Laserstrahlung 22 die gleiche hohe Intensität erreicht, wie sie von den Laserstrahlemittern vergleichsweise höherer Laserleistung 21.1 ausgehen würde. Mit dieser Geschwindigkeit wird der in x-Richtung orientierte Abschnitt des Reflexionskanals 33 der ersten Baugruppe 35 passiert. Die Laserstrahlemitter vergleichsweise höherer Laserleistung 21.1 sind zu diesem Zeitpunkt noch nicht in Betrieb. Nach dem Passieren dieses ersten Abschnitts werden Laserstrahlemitter höherer Laserleistung 21.1 zugeschaltet und gleichzeitig die Relativbewegung R auf normale Geschwindigkeit erhöht. Die Laserstrahlemitter 21.1 und 21.2 passieren dann mit einer optimierten Geschwindigkeit die in y-Richtung orientierten Reflexionskanäle 33 der Baugruppen 35 und 36. Erst wenn die Laserstrahlemitter 21.2 den zweiten, in x-Richtung orientierten Abschnitt des Reflexionskanals 33 der ersten Baugruppe 35 erreichen, werden die Laserstrahlemitter 21.1 wieder abgeschaltet und gleichzeitig die Relativbewegung R verlangsamt bis auch dieser Abschnitt verschweißt ist.

Der durch die erste Baugruppe 35 verlaufende Reflexionskanal 33 weist eine bestimmte, in z-Richtung verlaufende Kanaltiefe T auf. Sie ist so gewählt, dass die in der Regel divergent in die Reflexionskanäle 33 eintretende Laserstrahlung 22 durch mehrfaches Hin- und Herreflektieren an den reflektierenden und parallelen Kanalwänden 34 durchmischt wird und dadurch besonders homogen verteilt im Bereich der Schweißnaht 13 auf die Werkstückteile 11, 12 auftrifft. Die Schweißnaht 13 wird dadurch ebenfalls sehr homogen ausgebildet.

Die Kanaltiefe T der Reflexionskanäle 33 der zweiten Baugruppe 36 ist aufgrund der Anbringung im Inneren der ersten Baugruppe 35 deutlich geringer als die der Reflexionskanäle 33 in der ersten Baugruppe 35. Da die Kanalwandflächen 34 in der zweiten Baugruppe 36 jedoch angewinkelt sind, kann bei einer mit dem Reflexionskanal 33 der ersten Baugruppe 35 vergleichbaren Breite der Schweißnaht 13 die gleiche Homogenisierungswirkung erreicht werden. Durch den trichterförmigen Querschnitt der Reflexionskanäle 33 wird die zu erwartende Anzahl an mehrfach hinund herreflektierter Laserstrahlung 22 erhöht, sodass auch hier eine ausreichende Durchmischung erreicht werden kann. Dies trifft insbesondere dann zu, wenn als Laserstrahlquelle 2 direkt strahlende Hochleistungsdiodenlaser eingesetzt werden, die mit der Fast-axis in y-Richtung ausgerichtet sind. Auf der dann in x-Richtung orientierten Slow-axis erreicht die Laserstrahlung 22 nur einen einfachen Divergenzwinkel von etwa 0,5°, der für eine ausreichende Homogenisierung in den Reflexionskanälen 33 mit kleiner Kanaltiefe T zu gering wäre.

Mit den angewinkelten Kanalwandflächen 34 wird außerdem erreicht, dass durch die größere Eintrittsöffnung der Reflexionskanäle 33 ein größerer Anteil der Laserstrahlung 22 auf die Schweißnähte 13 konzentriert werden kann. Somit lassen sich, im Vergleich zu senkrecht stehenden Kanalwandflächen, mit der gleichen Laserleistung höhere Intensitäten erzielen.

Die Bereiche der zweiten Baugruppe 36, die sich an der Oberseite 31 zwischen einzelnen Reflexionskanälen 33 befinden, werden ebenfalls von der Laserstrahlung 22 erfasst. Damit es in diesem Bereich nicht zur Aufheizung der zweiten Baugruppe 36 kommt, werden diese Bereiche mit angewinkelten und reflektierenden Strahlablenkern 38 abgedeckt, welche die nicht nutzbare Laserstrahlung 22 um mehr als 45° zur Richtung der Laserstrahlung 22 ablenken und in Strahlabsorber 39 leiten.

Für den Fall das die Abstände zwischen den parallelen Schweißnähten 13 des Bereichs B2 klein genug sind, können die Kanalwandflächen 34 an der Oberseite 31 auch zu einer gemeinsamen, schmalen Kante zusammengeführt werden, sodass sich in x-Richtung die Eintrittsöffnungen der Reflexionskanäle 33 ohne Zwischenraum unmittelbar aneinander reihen. Dadurch kann auf die Verwendung der Strahlablenker 38 verzichtet werden und der Anteil nicht nutzbarer Laserstrahlung 22 bleibt verschwindend gering.

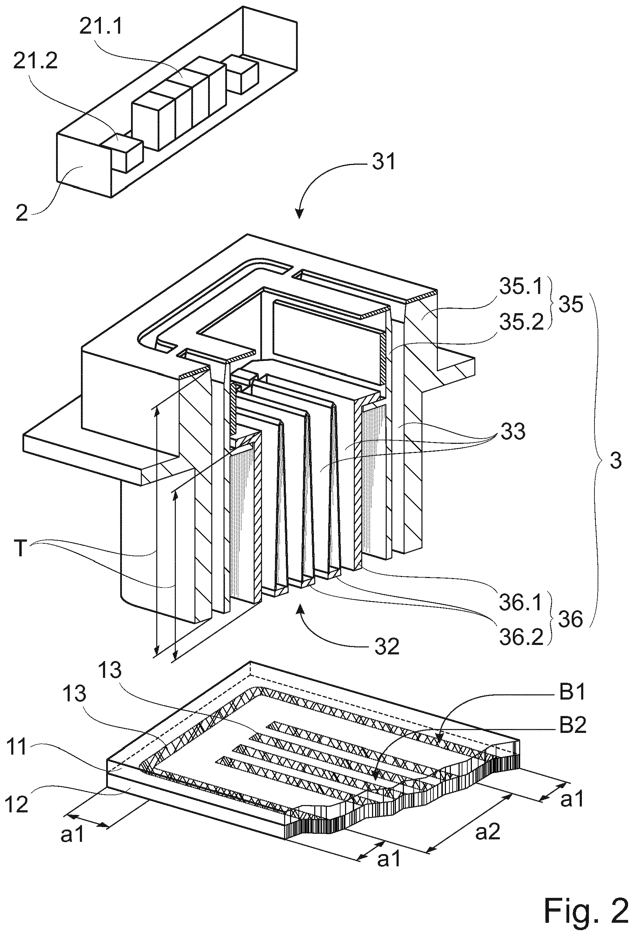

In einem anderen in Fig. 2 dargestellten Ausführungsbeispiel befinden sich alle Oberflächen der Unterseiten 32 der ersten Baugruppe 35 und der zweiten Baugruppe 36 des Homogenisierers 3 in einer gemeinsamen Ebene. Dadurch kann der Homogenisierer 3 auf alle transparenten Werkstückteile 11 aufgesetzt werden, die eine ebene Oberfläche aufweisen.

Die Bereiche B1, B2 unterschiedlicher Eigenschaften werden durch das Material des absorbierenden Werkstücks 12 gebildet. Dieses weist im Bereich B1 für die verwendete Laserstrahlung 22 eine vergleichsweise höhere Absorption a1 auf als im Bereich B2 mit einer vergleichsweise niedrigeren Absorption a2. Das transparente Werkstückteil 11 besteht aus einem homogenen Material, dass keine Unterschiede in der Transparenz aufweist. Der Bereich B1 wird von der ersten Baugruppe 35 und der Bereich B2 von der zweiten Baugruppe des Homogenisierers 3 abgedeckt.

Wie in Fig. 2 dargestellt, weist der Homogenisierer 3 die entsprechend dem ersten Bereich B1 angepasste erste Baugruppe 35 auf, durch die der Reflexionskanal 33 für eine geschlossene und den Randbereich der Werkstückteile 11, 12 verbindende Schweißnaht 13 realisiert wird und die, entsprechend des zweiten Bereichs B2 angepasste zweite Baugruppe 36, durch welche die Reflexionskanäle 33 für mehrere, parallel angeordnete und das Zentrum der Werkstückteile 11, 12 verbindende Schweißnähte 13 realisiert wird.

Aufgrund der vergleichsweise hohen Absorption a1 ist im Bereich B1 des absorbierenden Werkstückteils 12 eine geringere Intensität der Laserstrahlung 22 zur Ausbildung der Schweißnaht 13 erforderlich als im Bereich B2 mit der vergleichsweise niedrigeren Absorption a2. Um diese Intensitätsunterschiede auszugleichen und beide Bereiche B1, B2 während der einen Relativbewegung R der Laserstrahlquelle 2 möglichst geschwindigkeitsoptimiert und gleichzeitig verschweißen zu können, wird die Laserstrahlquelle 2 aus zwei äußeren, den in y-Richtung orientierten Abschnitten der Reflexionskanäle 33 der ersten Baugruppe 35 gegenüberstehenden, Laserstrahlemittern vergleichsweise geringerer Laserleistung 21.2 aufgebaut. Dabei werden zwischen diesen Laserstrahlemittern 21.2, eine der Anzahl der Reflexionskanäle 33 der zweiten Baugruppe 36 entsprechende Anzahl von Laserstrahlemittern vergleichsweise höherer Laserleistung 21.1 aufgebaut.

Um bei gleichbleibenden Intensitäten der unterschiedlichen Laserstrahlemitter 21.1 und 21.2 in den unterschiedlichen Bereichen B1 und B2, bei optimierter Bearbeitungszeit trotzdem Schweißnähte 13 gleicher Qualität herstellen zu können, müssen die Werkstückteile 11, 12 mit unterschiedlicher Einwirkdauer der Laserstrahlung 22 beaufschlagt werden. Dazu erfolgt in den Bereichen B1 und B2 eine entsprechende Anpassung der Geschwindigkeit der Relativbewegung R.

Am Beginn der Relativbewegung R wird dazu die Geschwindigkeit soweit erhöht, dass die von den Laserstrahlemittern vergleichsweise höherer Laserleistung 21.1 ausgehende Laserstrahlung 22 nur eine Intensität erreicht, die der von den Laserstrahlemittern vergleichsweise geringerer Laserleistung 21.2 ausgehenden Intensität entspricht. Mit dieser Geschwindigkeit wird der in x-Richtung orientierte Abschnitt des Reflexionskanals 33 der ersten Baugruppe 35 passiert. Nach dem Passieren dieses Abschnitts wird die Relativbewegung R auf die normale Geschwindigkeit abgesenkt. Die Laserstrahlemitter 21.1 und 21.2 passieren dann mit einer optimierten Geschwindigkeit die in y-Richtung orientierten Reflexionskanäle 33 der Baugruppen 35 und 36. Erst wenn die Laserstrahlemitter 21.1 den zweiten in x-Richtung orientierten Abschnitt des Reflexionskanals 33 der ersten Baugruppe 35 erreichen, wird die Relativbewegung R wieder erhöht, bis auch dieser Abschnitt verschweißt ist.

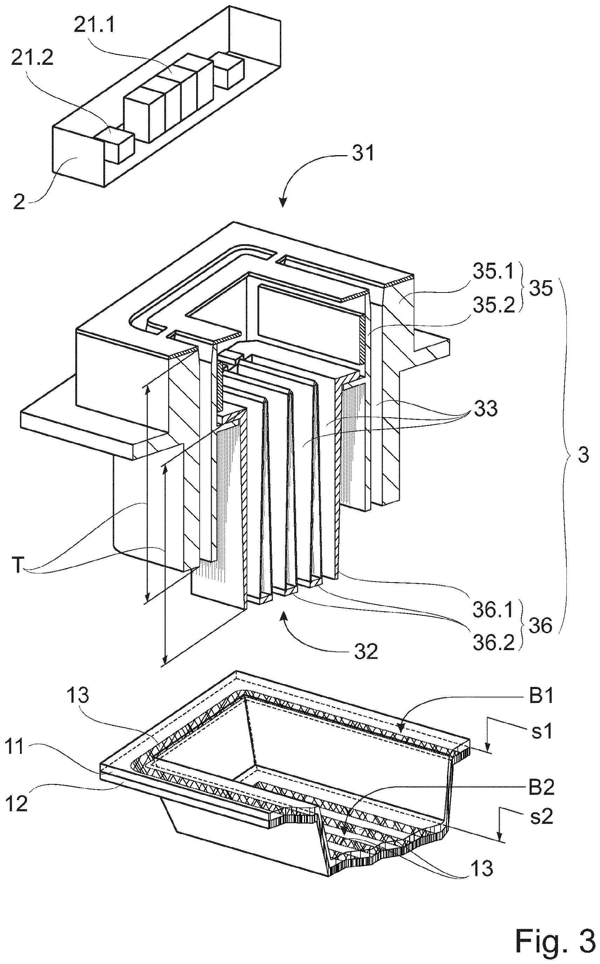

Es wäre genauso möglich, bei einer konstanten Geschwindigkeit der Relativbewegung R, mit reduzierter Intensität der von den Laserstrahlemittern vergleichsweise höherer Leistung 21.1 ausgehenden Laserstrahlung 22 zu arbeiten. In einem weiteren, in Fig. 3 dargestellten Ausführungsbeispiel weist die Unterseite des Homogenisierers 3 einen signifikanten Unterschied zwischen den Abständen der ersten Baugruppe B1 und der zweiten Baugruppe B2 zur Laserstrahlquelle 2 auf. Ein solcher Homogenisierer 3 kann für in z-Richtung dreidimensional ausgeformte Werkstückteile 11, 12 verwendet werden.

Die Bereiche B1, B2 unterschiedlicher Eigenschaften der Werkstückteile 11, 12 werden durch die Lage der Schweißnähte 13 in unterschiedlichen Schweißebenen gebildet, wobei sich die Schweißebene durch den Abstand der Schweißnaht 13 zur Laserstrahlquelle 2 in z-Richtung definiert wird. Der Bereich B1 weist einen vergleichsweise kurzen Abstand s1 und der Bereich B2 einen vergleichsweise langen Abstand s2 zur Laserstrahlquelle 2 auf.

Zur Aufnahme solcher Werkstückteile 11, 12 weist die in Fig. 3 nicht dargestellte Aufnahme 4 Vertiefungen, Anschläge, Flächen oder ähnliche Mittel auf, die entsprechend der dreidimensionalen Form der Werkstückteile 11, 12 ausgeformt oder angeordnet sind und an denen die Werkstückteile 11, 12 in allen drei Raumrichtungen fixiert werden.

Aufgrund des kurzen Abstands s1 der Schweißebene im ersten Bereich B1 trifft die Laserstrahlung 22 mit einer höheren Intensität auf den Werkstückteilen 11, 12 auf als in der weiter von der Laserstrahlquelle 2 entfernten Schweißebene mit dem langen Abstand s2. Zur Herstellung von Schweißnähten 13 gleicher Qualität müssen die sich in den unterschiedlichen Abständen s1; s2 ergebenden Intensitätsunterschiede ausgeglichen werden. Dazu werden dem Bereich B1, die Laserstrahlemitter vergleichsweise geringerer Laserleistung 21.2 und dem Bereich B2 die Laserstrahlemitter vergleichsweise höherer Laserleistung 21.1 zugeordnet. Die Laserstrahlquelle 2 ist dementsprechend aus zwei äußeren, den in y-Richtung orientierten Abschnitten der Reflexionskanäle 33 der ersten Baugruppe 35 gegenüberstehenden Laserstrahlemittern vergleichsweise geringerer Laserleistung 21.2 und, zwischen diesen Laserstrahlemittern 21.2, einer der Anzahl der Reflexionskanäle 33 der zweiten Baugruppe 36 entsprechenden Anzahl Laserstrahlemittern vergleichsweise höherer Laserleistung 21.1 aufgebaut.

Das Verschweißen der in x-Richtung orientierten Abschnitte der Schweißnaht 13 im Bereich B1 mit den Laserstrahlemittern vergleichsweise höherer Laserleistung 21.1 kann wie im vorhergehend beschriebenen Ausführungsbeispiel erfolgen.

Es ist selbstverständlich auch möglich, dass mit der Vorrichtung Werkstückteile 11, 12 verschweißt werden können, die mehr als nur zwei Bereiche unterschiedlicher Eigenschaften oder eine Kombination aus allen drei zuvor genannten Bereichen unterschiedlicher Eigenschaften aufweisen, wenn eine entsprechende Anpassung der Laserstrahlquelle 2 und eine entsprechende Steuerung der Relativbewegung R und der Ein- und Ausschaltzeitpunkte der einzelnen Laserstrahlemitter 21.1, 21.2 durch die Speicher- und Steuereinheit 6 erfolgt.

### Bezugszeichenliste

- 11: transparentes Werkstückteil
- 12: absorbierendes Werkstückteil
- 13: Schweißnaht
- B1: erster Bereich einer Eigenschaft der Werkstückteile
- B2: zweiter Bereich einer Eigenschaft der Werkstückteile
- d1: vergleichsweise größere Dicke
- d2: vergleichsweise kleinere Dicke
- s1: vergleichsweise kurzer Abstand
- s2: vergleichsweise langer Abstand
- a1: vergleichsweise hohe Absorption
- a2: vergleichsweise niedrige Absorption

- 2: Laserstrahlquelle
- 21.1: Laserstrahlemitter vergleichsweise höherer Laserleistung
- 21.2: Laserstrahlemitter vergleichsweise geringerer Laserleistung
- 22: Laserstrahlung
- R: Relativbewegung

- 3: Homogenisierer
- 31: Oberseite des Homogenisierers
- 32: Unterseite des Homogenisierers
- 33: Reflexionskanal
- 34: Kanalwandflächen
- 35: erste Baugruppe
- 35.1: äußere Kanalwand der ersten Baugruppe
- 35.2: innere Kanalwand der ersten Baugruppe
- 35.3: Steg
- 36: zweite Baugruppe
- 36.1: äußere Kanalwand der zweiten Baugruppe
- 36.2: innere Kanalwand der zweiten Baugruppe
- 36.3: Rahmen
- 37: Flansch
- 38: Strahlablenker
- 39: Strahlabsorber
- T: Kanaltiefe

- 4: Aufnahme
- 5: Transporteinrichtung
- 6: Speicher- und Steuereinheit

## Patentansprüche

1. Vorrichtung zum Verbinden zweier Werkstückteile (11, 12) zu einem Werkstück mittels Durchstrahlschweißen, über in einem vorgegebenen Schweißnahtmuster, in Bereichen (B1, B2) unterschiedlicher Eigenschaften der Werkstückteile, verlaufende Schweißnähte (13),
mit einer Aufnahme (4), die dazu ausgelegt ist, zwei in x-y-Richtung ausgedehnte Werkstückteile (11, 12) zueinander in x-, y- und z-Richtung eines kartesischen Koordinatensystems zu positionieren,
mit einer auf die Aufnahme (4) und damit auf in dieser positionierte Werkstückteile (11, 12) mit ihrer Abstrahlrichtung ausgerichteten Laserstrahlquelle (2), bestehend aus einer Vielzahl von einzeln ansteuerbaren, in x-Richtung nebeneinander angeordneten Laserstrahlemittern,
mit einer Transporteinrichtung (5) zum relativen Transportieren der Laserstrahlquelle (2) zur Aufnahme (4) in y-Richtung,
sowie mit einer Speicher- und Steuereinheit (6), **dadurch gekennzeichnet,**
**dass** der Laserstrahlquelle (2) in Abstrahlrichtung ein Homogenisierer (3) nachgeordnet ist, in dem wenigstens zwei zueinander parallel in y-Richtung verlaufende, den Homogenisierer (3) in z-Richtung mit einer Kanaltiefe (T) vollständig durchdringende Reflexionskanäle (33) vorgesehen sind, die entsprechend einem vorgegebenen Schweißnahtmuster dimensioniert und zueinander angeordnet sind, und den wenigstens zwei Reflexionskanälen (33) jeweils einer der Laserstrahlemitter unterschiedlicher Laserleistung (21.1, 21.2) zugeordnet ist,
**dass** die Reflexionskanäle (33) sich gegenüberliegende reflektierende Kanalwandflächen (34) aufweisen, an denen wenigstens ein Teil der von dem zugeordneten Laserstrahlemitter (21.1, 21.2) kommenden Laserstrahlung (22) mehrfach hin- und herreflektiert wird,
**dass** die Laserstrahlemitter unterschiedlicher Laserleistung (21.1, 21.2), wenigstens Laserstrahlemitter einer vergleichsweise geringeren Laserleistung (21.2) und Laserstrahlemitter einer vergleichsweise höheren Laserleistung (21.1) umfassen, um bei einer gleichen Einwirkdauer jeweils emittierender Laserstrahlung (22) zeitgleich parallele Schweißnähte (13) gleicher Qualität in Bereiche (B1, B2) unterschiedlicher Eigenschaften der Werkstückteile (11, 12) erzeugen zu können, dass die Kanalwandflächen (34) zur Abstrahlrichtung der Laserstrahlquelle (2) angewinkelt angeordnet sind, sodass die an den Kanalwandflächen (34) reflektierte Laserstrahlung (22) einen steileren Reflexionswinkel aufweisen, wodurch die Anzahl der Reflexionen der Laserstrahlung (22) steigerbar ist und
**dass** die einen Reflexionskanal (33) bildenden Kanalwandflächen (34) im Homogenisierer (3) einzeln austauschbar und frei positionierbar sind.

2. Vorrichtung nach Anspruch 1, **dadurch gekennzeichnet,**
**dass** unmittelbar aneinander angrenzende und angewinkelte Kanalwandflächen (34) in einer entgegen der Abstrahlrichtung der Laserstrahlquelle (2) gerichteten gemeinsamen, sich zu einer Spitze verjüngenden Kante auslaufend angeordnet sind, um Laserleistungsverluste zu vermeiden.

3. Vorrichtung nach Anspruch 1, **dadurch gekennzeichnet,**
**dass** der Homogenisierer (3) einen modularen Aufbau aus, an die Bereiche (B1, B2) unterschiedlicher Eigenschaften angepassten, Baugruppen (35, 36) aufweist.

## Claims

1. Device for connecting two workpiece parts (11, 12) to form a workpiece by through-transmission welding along weld seams (13) running in a predetermined weld seam pattern in regions (B1, B2) of the workpiece parts having different characteristics, with a receptacle (4) which is configured so as to position two workpiece parts (11, 12) extending in X direction and Y direction relative to one another in the X direction, Y direction and Z direction of a Cartesian coordinate system,
with a laser beam source (2) aligned in the radiating direction thereof on the receptacle (4) and, therefore, on workpiece parts (11, 12) positioned therein, which laser beam source (2) comprises a plurality of individually controllable laser beam emitters which are arranged adjacently in X direction,
with a transporting device (5) for transporting the laser beam source (2) relative to the receptacle (4) in Y direction,
and with a storage-and-control unit (6), **characterized in**
**that** a homogeniser (3) is arranged downstream of the laser beam source (2) in radiating direction, at least two reflection channels (33) being provided in the homogeniser (3) which run parallel to one another in Y direction, completely penetrate the homogeniser (3) in Z direction with a channel depth (T), and are dimensioned and arranged relative to one another corresponding to a predetermined weld seam pattern, and one of the laser beam emitters of different laser power (21.1, 21.2) is associated respectively with the at least two reflection channels (33),
**that** the reflection channels (33) have opposed reflecting channel wall surfaces (34) at which at least a portion of the laser radiation (22) coming from the associated laser beam emitter (21.1, 21.2) is repeatedly reflected back and forth,
**that** the laser beam emitters of different laser power (21.1, 21.2) comprise at least laser beam emitters of a comparatively lower laser power (21.2) and laser beam emitters of a comparatively higher power (21.1) so that, with laser radiation (22) emitting over the same duration, parallel weld seams (13) of like quality can be generated simultaneously in regions (B1, B2) of the workpiece parts (11, 12) having different characteristics,
**that** the channel wall surfaces (34) are arranged at an inclination to the radiating direction of the laser beam source (2) such that the laser radiation (22) reflected at the channel wall surfaces (34) has a steeper reflection angle so that the quantity of reflections of the laser radiation (22) can be increased, and
**that** the channel wall surfaces (34) forming a reflection channel (33) in the homogenizer (3) are individually exchangeable and freely positionable.

2. Device according to claim 1, **characterized in that** directly abutting and inclined channel wall surfaces (34) are arranged so as to terminate in a common edge directed opposite the radiating direction of the laser beam source (2) and converging to a point in order to prevent laser power losses.

3. Device according to claim 1, **characterized in that** the homogenizer (3) is modularly constructed of component assemblies (35, 36) which are adapted to the regions (B1, B2) having different characteristics.

## Revendications

1. Dispositif de liaison de deux parties de pièce (11, 12) pour former une pièce au moyen de soudage par transmission le long de soudures (13) s'étendant selon un modèle de soudure prédéterminé dans des zones (B1, B2) des pièces ayant des caractéristiques différentes,
avec un réceptacle (4) conçu pour positionner deux parties de pièce (11, 12) s'étendant dans la direction X et Y l'une par rapport à l'autre dans la direction X, la direction Y et la direction Z d'un système de coordonnées cartésiennes,
avec une source de faisceau laser (2) qui est alignée dans sa direction de rayonnement sur le réceptacle (4) et, alors, sur des parties de pièce (11, 12) positionnées dans le réceptacle (4), la source de faisceau laser (2) comprenant une pluralité d'émetteurs de faisceau laser susceptibles d'être commandé individuellement et disposés de manière adjacente dans la direction X,
avec un dispositif de transport (5) pour transporter la source de faisceau laser (2) relativement au réceptacle (4) dans la direction Y,
et avec une unité de mémoire et de commande (6), **caractérisé en ce qu'**un homogénéisateur (3) est disposé en aval de la source de faisceau laser (2) dans la direction de rayonnement, au moins deux canaux de réflexion (33) étant prévus dans l'homogénéisateur (3) qui s'étendent parallèlement les uns aux autres dans la direction Y, pénètrent l'homogénéisateur (3) complètement dans la direction Z avec une profondeur de canal (T), et sont dimensionnés et disposés les uns par rapport aux autres correspondant à un modèle de soudure prédéterminé, et un des émetteurs de faisceau laser de puissance laser différente (21.1, 21.2) est associé respectivement aux au moins deux canaux de réflexion (33),
que les canaux de réflexion (33) ont des surfaces de paroi de canal (34) réfléchissantes opposées, sur lesquelles au moins une partie du rayonnement laser (22) venant de l'émetteur de faisceau laser (21.1, 21.2) associé est réfléchie d'avant en arrière plusieurs fois,
que les émetteurs de faisceau laser de puissance laser différente (21.1, 21.2) comprennent au moins des émetteurs de faisceau laser d'une puissance laser comparativement moins élevée (21.2) et des émetteurs de faisceau laser d'une puissance laser comparativement plus élevée (21.1) de telle façon qu'avec un rayonnement laser (22) émettant sur la même durée, des soudures (13) parallèles de même qualité peuvent être générées simultanément dans des régions (B1, B2) des parties de pièce (11, 12) ayant des caractéristiques différentes,
que les surfaces de paroi de canal (34) sont disposées en inclinaison à la direction de rayonnement de la source de faisceau laser (2) de telle façon que le rayonnement laser (22) réfléchi sur les surfaces de paroi de canal (34) a un angle de réflexion plus raide ce qui permet d'augmenter la quantité de réflexions du rayonnement laser (22), et
que les surfaces de paroi de canal (34) formant un canal de réflexion (33) dans l'homogénéisateur (3) sont échangeables individuellement et positionnables librement.

2. Dispositif selon la revendication 1, **caractérisé en ce que** des surfaces de paroi de canal (34) directement adjacentes et inclinées sont disposées de manière à terminer dans un bord commun dirigé à l'opposé de la direction de rayonnement de la source de faisceau laser (2) et convergeant vers une pointe pour éviter des pertes de puissance laser.

3. Dispositif selon la revendication 1, **caractérisé en ce que** l'homogénéisateur (3) a une construction modulaire d'ensembles de composants (35, 36) qui sont adaptés aux régions (B1, B2) ayant des caractéristiques différentes.
